# EUROPEAN PATENT APPLICATION

(11) **EP 4 672 175 A1**
(43) Date of publication of application: **31.12.2025**
(21) Application number: 24184959.5
(22) Date of filing: 27.06.2024
(51) Int. Cl.: G06V 10/82, G06V 20/58, G06V 10/62, G06V 10/764, G06V 20/64

(54) **POSITIONAL ENCODINGS FOR PERCEPTION FUNCTIONS IN AUTOMATED DRIVING SYSTEMS**

(71) Applicant: Zenseact AB, 417 56 Gothenburg (SE)
(72) Inventor: VERBEKE, Willem, 412 59 Göteborg (SE); JOHNANDER, Joakim, 587 37 Linköping (SE)
(74) Representative: Zacco Sweden AB

(57) **Abstract**

Computer-implemented methods and related aspects for making perception predictions from 2D input data for a perception functionality of an automated driving system of a vehicle. The computer-implemented method comprises generating 2D position information for image data representative of an image captured by a vehicle-mounted camera. The 2D position information is indicative of a position of each pixel out of a plurality of pixels of the image in a 2D reference frame of the image, or a position of each patch out of a plurality of patches of the image in the 2D reference frame of the image. The computer-implemented method further comprises feeding input data comprising the generated 2D position information, extrinsic parameters of the vehicle-mounted camera, intrinsic parameters of the vehicle-mounted camera, and distortion parameters of the vehicle-mounted camera to a multilayer perceptron configured to process the input data and to output 3D positional encodings for the plurality of pixels or the plurality of patches. The computer-implemented method further comprises feeding the image data and the 3D positional encodings to a transformer network configured to process the image data and the 3D positional encodings and to generate a prediction output in a 3D reference frame or 2D reference frame of the vehicle.

## Description

### TECHNICAL FIELD

The disclosed technology relates to methods and other related aspects for making perception predictions from 2D input data for a perception functionality of an automated driving system of a vehicle. In particular, but not exclusively, the disclosed technology relates to providing 3D information about image pixels into the positional encodings used by transformer networks for solving a perception task.

### BACKGROUND

During the last few years, the research and development activities related to autonomous vehicles have exploded in number and many different approaches are being explored. An increasing portion of modern vehicles have advanced driver-assistance systems (ADAS) to increase vehicle safety and more generally road safety. ADAS - which for instance may be represented by adaptive cruise control (ACC) collision avoidance system, forward collision warning, etc. - are electronic systems that may aid a vehicle driver while driving. Today, there is ongoing research and development within a number of technical areas associated to both the ADAS and the Autonomous Driving (AD) field. AD and ADAS may also be referred to as Automated Drive Systems (ADS) with different levels, where AD is commonly classified as ADS of level 3 or higher as defined by SAE J3016, while ADAS is commonly classified as ADS of level 2 or lower as defined by SAE J3016.

Traditionally, automated driving systems have relied on a combination of sensors such as LiDAR (Light Detection and Ranging), RADAR (Radio Detection and Ranging), ultrasonic sensors, and cameras to gather data about the environment. Among these, LiDAR has been particularly favoured for its ability to generate precise 3D maps of the surroundings.

In contrast, monocular cameras, which capture 2D images, offer a more affordable and compact alternative. Cameras further offer high resolution data and contain complementary offer to the information provided by RADAR and LiDAR sensors, such as colour. These cameras are already widely used in many modern vehicles for various driver assistance functions such as lane-keeping, object detection, and traffic sign recognition. Despite their advantages, monocular cameras have inherent limitations in depth perception, making it challenging to generate accurate 3D representations of the environment from 2D images alone.

Thus, there is a need for new solutions that enhance the perception functionality of automated driving systems to be able to use the images from monocular cameras to provide 3D perception to make automated driving systems more accessible, cost-effective, and efficient.

### SUMMARY

The herein disclosed technology seeks to mitigate, alleviate or eliminate one or more of the above-identified deficiencies and disadvantages in the prior art to address various problems relating to generating perception output in a 3D reference frame based on images from monocular cameras.

Various aspects and embodiments of the disclosed technology are defined below and in the accompanying independent and dependent claims.

A first aspect of the disclosed technology comprises a computer-implemented method for making perception predictions from 2D input data for a perception functionality of an automated driving system of a vehicle. The computer-implemented method comprises generating 2D position information for image data representative of an image captured by a vehicle-mounted camera. The 2D position information is indicative of a position of each pixel out of a plurality of pixels of the image in a 2D reference frame of the image, or a position of each patch out of a plurality of patches of the image in the 2D reference frame of the image. The computer-implemented method further comprises feeding input data comprising the generated 2D position information, extrinsic parameters of the vehicle-mounted camera, intrinsic parameters of the vehicle-mounted camera, and distortion parameters of the vehicle-mounted camera to a (trained) multilayer perceptron configured to process the input data and to output 3D positional encodings for the plurality of pixels or the plurality of patches. The computer-implemented method further comprises feeding the image data and the 3D positional encodings to a (trained) transformer network configured to process the image data and the 3D positional encodings and to generate a prediction output in a 3D reference frame or a 2D reference frame of the vehicle.

A second aspect of the disclosed technology comprises a computer program product comprising instructions which, when the program is executed by a computing device of a vehicle, causes the computing device to carry out the method according to any one of the embodiments disclosed herein. With this aspect of the disclosed technology, similar advantages and preferred features are present as in the other aspects.

A third aspect of the disclosed technology comprises a (non-transitory) computer-readable storage medium comprising instructions which, when executed by a computing device of a vehicle, causes the computing device to carry out the method according to any one of the embodiments disclosed herein.

With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises an apparatus for making perception predictions from 2D input data for a perception functionality of an automated driving system of a vehicle. The apparatus comprising one or more processors and one or more memory storage areas comprising program code, the one or more memory storage areas and the program code being configured to, with the one or more processors, cause the apparatus to at least generate 2D position information for image data representative of an image captured by a vehicle-mounted camera. The 2D position information is indicative of a position of each pixel out of a plurality of pixels of the image in a 2D reference frame of the image, or a position of each patch out of a plurality of patches of the image in the 2D reference frame of the image. The one or more memory storage areas and the program code are further configured to, with the one or more processors, cause the apparatus to at least feed input data comprising the generated 2D position information, extrinsic parameters of the vehicle-mounted camera, intrinsic parameters of the vehicle-mounted camera, and distortion parameters of the vehicle-mounted camera to a (trained) multilayer perceptron configured to process the input data and output 3D positional encoding for the plurality of pixels or the plurality of patches. The one or more memory storage areas and the program code are further configured to, with the one or more processors, cause the apparatus to at least feed the image data and the 3D positional encodings to a (trained) transformer network configured to process the image data and the 3D positional encodings and to generate a prediction output in a 3D reference frame or a 2D reference frame of the vehicle. With this aspect of the disclosed technology, similar advantages and preferred features are present as in the other aspects.

A fifth aspect of the disclosed technology comprises a vehicle comprising an apparatus according to any one of the embodiments of the fourth aspect disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that there is provided a computationally efficient and fast solution for utilizing transformer networks in perception tasks for automated driving systems, where the perception output is in a 3D reference frame while the input comprises image data from monocular cameras among other sensor data.

An advantage of some embodiments is that there is provided a data-driven approach to enhance transformer networks used in perception tasks for automated driving systems with the ability to understand complex spatial relationships between different sensors mounted on the vehicle.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a computer-implemented method for making perception predictions from 2D input data for a perception functionality of an automated driving system of a vehicle, in accordance with some embodiments.
Fig. 2 is a schematic block diagram representation of an apparatus for making perception predictions from 2D input data for a perception functionality of an automated driving system of a vehicle, in accordance with some embodiments.
Fig. 3 is a schematic illustration of a vehicle comprising an apparatus for making perception predictions from 2D input data for a perception functionality of an automated driving system of a vehicle, in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. The term "at least one of A and B" is to be interpreted in the conjunctive and disjunctive form, meaning that it can be only A, only B, or both of A and B.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

Recent advancements in computer vision and machine learning have opened new avenues for addressing challenges related to perception accuracy in automated driving systems.

Embodiments herein pertain to automated driving systems, and more specifically, to methods and systems for generating perception predictions (i.e., solving perception tasks) from 2D input data captured by monocular cameras. The proposed solution utilizes advanced neural network architectures to process 2D images and output detailed 3D or 2D representations of the vehicle's surroundings. This capability is crucial for enabling reliable perception in automated driving systems, particularly in scenarios where cost, space, and power constraints limit the use of multiple or high-cost sensors like LiDAR.

By enhancing the ability of monocular cameras to provide 3D perception, embodiments herein aim to make automated driving systems more accessible, cost-effective, and efficient. The resulting technology has the potential to accelerate the adoption of automated vehicles, contributing to safer and more intelligent transportation systems worldwide.

Transformers, as a deep learning architecture, are becoming the "go-to" neural network architecture for solving droves of problems at scale. A key building block for transformer networks is the attention operation, which has the mathematical property of being permutation invariant. For example, if one gives an input in the form of a text to an attention function, the same result will be output regardless of what order the words appear in. However, this property is not desirable in many tasks that you would like to be solved by the transformer network, such as natural language processing and computer vision tasks. The order of words in a sentence matters and so does the location of pixels in an image. To address this issue, transformers use positional encodings. In a positional encoding, each individual data sample (e.g., word or pixel) processed by the attention function is enriched with information about its position relative to the rest of the dataset. For image processing, a concrete example would be adding two additional channels to an image. In more detail, each pixel comprises in general a red, green, and blue value, and by adding 2D coordinates (i.e., x and y coordinate) one obtains information about each pixel in relation to each other pixel of the image as well. This positional information is often referred to as "positional encodings".

In the field of automated driving systems, and in particular for perception functionality of an ADS, one can utilize a transformer network to fuse the information from multiple sensors in order to track the state of the surrounding environment of the vehicle over time. The output or the predictions ("prediction output") from the transformer network may for example be object detections, object classifications, lane detections, ego-vehicle trajectory predictions, object trajectory predictions, or occupancy predictions. This fusion of information can be achieved by using a so-called cross-attention mechanism employed in the transformer network. Moreover, it is desirable to fuse information retrieved from a monocular camera with information retrieved from other monocular cameras and/or with information retrieved from other sensors such as RADAR sensors or LiDAR sensors. However, when fusing the information retrieved from multiple sensors where at least one of the sensors is a monocular camera, the conventional positional encodings in the image data in the form of pixel coordinates (2D positional encodings) may not be sufficient for the transformer network to be able to provide an accurate output.

To this end, it is herein proposed to automatically generate and include information in the image data that makes it possible for the transformer network to make sense of how all sensors relate to each other, and in particular how image data from monocular cameras relates to the output from the other sensors. In more detail, the architecture proposed herein automatically generates 3D spatial information about each pixel in the image data, and optionally time information, into the positional encodings of each pixel in the image data in order to enable the cross-attention mechanism of the transformer network to relate the different sensor outputs to each other. Thereby enabling the transformer network to provide accurate and reliable prediction outputs in a 3D reference frame.

In more detail, each camera mounted on a vehicle has a number of calibration parameters. The calibration parameters include extrinsic parameters, intrinsic parameters, and distortion parameters. In short, the extrinsic parameters describe the pose of the camera in a 3D space relative to a reference frame of the vehicle, while the intrinsic and distortion parameters parametrize the projection of 3D locations into the cameras field of view. In other words, using these calibration parameters a 3D coordinate in the cameras field of view can be converted into a 2D pixel coordinate in the image plane, and vice versa.

Accordingly, given some image data representative of an image captured by a vehicle-mounted (monocular) camera, the architecture proposed herein generates 2D positional information for each "pixel" of the image, where the 2D positional information describes the location of each pixel in the image plane, i.e., relative to the other pixels of the image.

It should be noted that "image data" may refer to an image as output by the camera or an encoded image if the image has been pre-processed through a neural network. Therefore, the term "pixel" is to be interpreted broadly and may be understood as a single feature vector in a 2D grid of feature vectors. In the standard image case, a feature vector would be a 3D vector (R, G, B), while for an encoded image a feature vector may be of much higher dimensionality as each "pixel" in an encoded image may include information from other pixels in the image rather than only the RGB-values for that particular pixel. Similarly, it should be noted that even though large parts of the present description may refer to "pixels" the same techniques are analogously applicable to "patches" (i.e., groups of pixels), depending on how one configures the neural networks used in the architecture.

The 2D positional information is then transformed to a 3D positional encoding using a learnable transformation. In more detail, the 2D positional encodings and the camera calibration parameters are fed as input to a multilayer perceptron (MLP) that outputs the 3D positional encodings, which are then appended (through concatenation or summing) to the feature vectors ("pixels") of the image data. In some embodiments, the MLP processes each pixel or patch individually and in parallel. In a straightforward example, the 3D positional encodings may be appended to the RGB values of the pixels. Lastly, the image data is fed together with the 3D positional encodings as input to a transformer network configured to generate a prediction output in a 3D reference frame (e.g., the vehicle's 3D coordinate system) or a 2D reference frame (e.g., a Bird's Eye View, BEV, projection).

The M LP may be trained in and end-to-end fashion together with the rest of the perception architecture, i.e., together with the transformer network and optionally with the image pre-processing networks if used. The MLP may also be shared between multiple cameras. Thereby, the MLP will "learn" to exploit the calibration parameters of each camera to generate an abstract value representing where a pixel in an image output by a particular camera belongs relative to the output from all other perception sensors of the vehicle.

Conventional methods for generating 3D positional encodings for image data rely on a pinhole camera model that allows them to use "unprojection" to create the positional encodings. However, for automotive applications, the pinhole camera model is not optimal, and may lead to sub-par accuracy in the final perception output. Another disadvantage of unprojection, is that even if one were to generalize it to other camera models, one would still need to sample specific points in 3D space, and that is a hyperparameter, while the herein disclosed solution is fully learnable.

Thus, it was realized by the present inventors that other camera models, that account for distortion effects, such as the Brown-Conrady camera model and the Kannala-Brandt camera model, are preferable in such applications. However, with these camera models the problem of generating the 3D positional encodings is not straightforward to solve and adopting conventional numerical methodology would likely require extensive computational power and not be fast enough. Therefore, it is suggested to employ a data-driven approach, using an MLP that is trained to directly generate the 3D positional encodings using the 2D position information and camera calibration data as input, which proved to be a fast and computationally efficient solution, that can be generalized making it particularly suitable for use in automated driving systems where timely output is critical and computational resources are limited.

### Definitions

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, RADAR, LiDAR, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while an AD aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

The "extrinsic parameters" refer to a set of parameters or values that describe the location and orientation of the camera in a "world coordinate system", and are used to describe the transformation from the world coordinate system to the camera coordinate system. In the present context, the "world coordinate system" may be referred to as the vehicle's 3D coordinate system having an origin at a centre of the vehicle's rear axis or on the ground directly below the centre of the vehicle's rear axis. The extrinsic parameters may include a rotation matrix defining how the camera is tilted in 3D space and a translation vector that specifies the camera's position in space in the vehicle's 3D coordinate system. The extrinsic parameters may be represented by a matrix, often referred to as a transformation matrix, that is a combination of the rotation matrix and the translation vector, and describes the complete pose of the camera.

The "intrinsic parameters" refer to a set of parameters or values that describe how the camera projects 3D points in the camera coordinate system to 2D points on the image plane. These parameters are independent of the camera's position and orientation in the world. The intrinsic parameters may include a focal length that determines the field of view of the camera, a principal point where the optical axis intersects the image plane, and a skew coefficient that represents the skewness of the pixel axis. The intrinsic parameters may be arranged into an intrinsic matrix.

The "distortion parameters" refer to a set of parameters or values that account for imperfections in the camera lens that cause the image to deviate from the ideal pinhole camera model. The distortion parameters may include radial distortion coefficients that describe the distortion caused by the shape of the lens, and tangential distortion coefficient that describe the distortion caused by the lens not being perfectly parallel to the image plane.

Even though the calibration parameters are generally described as matrices or vectors, it should be noted that any suitable representation of the cameras extrinsic, intrinsic and distortion parameters may be used.

In the present context, a "neural network" or a "machine learning algorithm" refers to a computational model or set of techniques that are used to enable a computer to solve a task, such as for example, the vehicle's perception system to interpret and understand the surrounding environment. Perception tasks (or "computer vision tasks") in ADSs involve the vehicle's ability to detect and recognize objects, obstacles, road signs, lane markings, pedestrians, other vehicles, and various environmental conditions as well as to predict trajectories of objects. The ADS uses machine learning algorithms to process sensor data, such as data from cameras, LiDAR, RADAR, and other sensors, to make informed decisions about how to navigate safely. These algorithms use data-driven techniques to analyse and classify objects, understand the road geometry, predict the movement of other road users, and/or assess potential risks in real-time. Common types of machine learning algorithms used in ADS perception tasks include deep neural networks, transformer networks, convolutional neural networks (CNNs) (e.g., for camera image processing, LiDAR output processing, etc.), recurrent neural networks (RNNs) (e.g., for sequence data), and various other techniques like support vector machines (SVM) and decision trees.

The machine-learning algorithms (may also be referred to as machine-learning models, neural networks, and so forth) are implemented in some embodiments using publicly available suitable software development machine learning code elements, for example, such as those which are available in Pytorch, Keras and TensorFlow or in any other suitable software development platform, in any manner known to be suitable to someone of ordinary skill in the art.

A "multi-layer perceptron" (MLP), in the context of image processing, refers to a type of artificial neural network architecture comprising an input layer for receiving pixel data from images, one or more hidden layers of neurons that apply non-linear transformations to the input data to capture complex features and patterns, and an output layer that generates predictions or classifications based on the processed data. Each neuron within a layer is connected to every neuron in the subsequent layer through weighted connections, which are iteratively adjusted during the training process to minimize a predefined loss function. The MLP utilizes activation functions in its hidden layers to introduce non-linearity, enabling the network to model intricate relationships within the image data. An MLP may be trained using supervised learning techniques, where it learns to map inputs to desired outputs by minimizing a loss function through optimization algorithms such as backpropagation and gradient descent.

In the present context, the MLP is trained to receive an input comprising 2D position information for pixels/patches in an image and a set of calibration parameters (extrinsic, intrinsic, and distortion parameters) related to the camera that the image data originated from, and to output 3D positional encodings relating each pixel (or each feature vector) of the image data to a reference point in a 3D reference frame of the vehicle. For example, one could consider the input (pixel with 2D positional information) as a vector, where the MLP is applied on a per-pixel basis for the input image data. Accordingly, the input image may be construed as a tensor of shape HxWxC, where H is the height of the image (pixel-wise), W is the width of the image (pixel-wise), and C is the number of channels in a pixel. The MLP is then applied HxW times to the input image.

In the present context, a "transformer network" refers to a deep learning architecture that integrates and processes data from at least one monocular camera together with data from multiple other vehicle sensors (including but not limited to other cameras, LiDAR, RADAR, and ultrasonic sensors) using attention mechanisms to model complex dependencies and relationships within the data. The network employs multi-head attention to capture various aspects of the sensor inputs, positional encoding to understand spatial and temporal context, and a multi-layered structure to learn hierarchical features. This enables the generation of a unified and comprehensive representation of the vehicle's surrounding environment, facilitating accurate perception and decision-making for automated driving tasks such as object detection, tracking, and scene understanding.

The surrounding environment of the ego-vehicle can be understood as a general area around the ego-vehicle in which objects (such as other vehicles, landmarks, obstacles, etc.) can be detected and identified by vehicle sensors (RADAR, LiDAR, cameras, etc.), i.e. within a sensor range of the ego-vehicle.

In the present context, a "sensor" or a "sensor device" refers to a specialized component or system that is designed to capture and gather information from the vehicle's surroundings. These sensors play a crucial role in enabling the ADS to perceive and understand their environment, make informed decisions, and navigate safely. Sensor devices are typically integrated into the autonomous vehicle's hardware and software systems to provide real-time data for various tasks such as obstacle detection, localization, road model estimation, and object recognition. Common types of sensor devices used in autonomous driving include LiDAR (Light Detection and Ranging), Radar, Cameras, and Ultrasonic sensors. LiDAR sensors use laser beams to measure distances and create high-resolution 3D maps of the vehicle's surroundings. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects.

The term "perception system" or "perception module" refers to a suite of technologies and algorithms used to gather, interpret, and comprehend data from the vehicle's environment. In order for the ADS to "perceive" its environment the perception system uses various sensors, including cameras, LiDAR (Light Detection and Ranging), RADAR, ultrasonic sensors, and GPS, to collect raw data about the surroundings. Each sensor provides different types of information, such as visual imagery, distance measurements, and speed of objects. The data from these diverse sensors is combined to create a more comprehensive and accurate understanding of the environment. This fusion process helps mitigate the limitations of individual sensors and improves the reliability of the perception system. Advanced algorithms analyse the fused data to identify and classify objects in the environment. This includes recognizing vehicles, pedestrians, cyclists, road signs, lane markings, and other relevant entities. The perception system may also be used to determine the precise position of the vehicle within its environment, often using a combination of GPS data and map information. This helps in understanding the vehicle's location relative to the detected objects. Moreover, once objects are detected and classified, the perception system may track their movements over time to predict their future positions and trajectories. Beyond detecting and tracking objects, perception systems may also interpret contextual information such as road conditions, weather, and traffic patterns. The herein disclosed embodiments may be a part of the ADS's perception system.

The term "3D reference frame of the vehicle" refers to a coordinate system that is fixed relative to the vehicle and used to define the positions and orientations of objects in the three-dimensional space surrounding the vehicle. This reference frame is generally used for the vehicle's perception and navigation processes, allowing it to understand and interpret the spatial relationships and dynamics of the environment. Typically, the origin of this reference frame is placed at a fixed point on the vehicle, such as the centre of the rear axle, the centre of the vehicle's front bumper, the centre of the vehicle's front axis, or another well-defined point on the vehicle body. However, the origin of this reference frame may be placed at a fixed point outside of the vehicle, such as on the ground directly below the centre of the rear axle, on the ground directly below the vehicle's front bumper, or the like. The X-axis often points forward in the direction the vehicle is facing, representing the longitudinal direction. The Y-axis often points to the left or right side of the vehicle, representing the lateral direction, and the Z-axis usually points upwards, representing the vertical direction. The term "2D reference frame of the vehicle" may be construed in an analogous manner, without the Z-axis. However, often the 2D reference frame represents a ground plane on which the vehicle is currently standing, and is often visualized from a top-view perspective (i.e., a Bird's Eye View perspective). Thus, the origin is often a point on the ground below the vehicle (e.g., below the centre of the vehicle's rear axis). The 2D reference frame provides a way to describe the position of objects on the ground plane around the vehicle. Any point can be described by two coordinates (X, Y) relative to this frame. As with the 3D reference frame, the 2D frame may move and rotate with the vehicle, i.e., the frame adapts as the vehicle changes its position and orientation.

### Embodiments

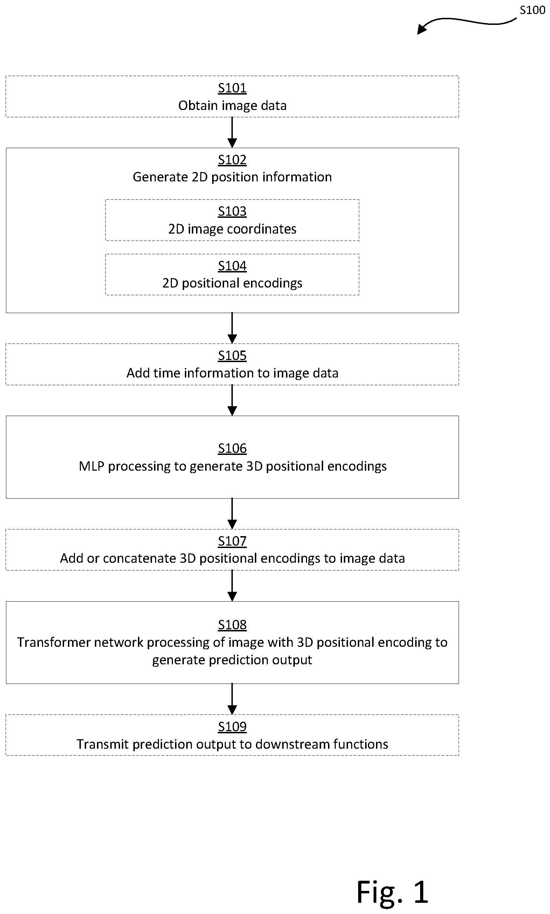

Fig. 1 is a schematic flowchart representation of a method S100 for making perception predictions from 2D input data for a perception functionality of an ADS of a vehicle in accordance with some embodiments. In other words, the method S100 is suitable for providing a perception output within a 3D reference frame or 2D reference frame of the vehicle based on input data that is within a 2D image frame. In particular, the input data may comprise sensor data from multiple sensors including 2D sensor data, such as image data from a monocular camera. Thus, it should be noted that the embodiments disclosed herein are not to be understood as methods and apparatuses for generating perception predictions solely from 2D input data, but as methods and apparatuses for generating perception predictions from input data that includes outputs from various sensor modalities including 2D sensor data (i.e., image data).

The method S100 is preferably a computer-implemented method S100, performed by a processing system of the ADS-equipped vehicle. The processing system may for example comprise one or more processors and one or more memories coupled to the one or more processors, wherein the one or more memories store one or more programs that perform the steps, services and functions of the method S100 disclosed herein when executed by the one or more processors.

The method S100 may be comprise obtaining S101 image data from a monocular camera mounted on the vehicle. The camera is preferably arranged to capture images of a portion of the surrounding environment of the vehicle. The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as generating, forming, computing, etc.

The image data may comprise raw image data output by the vehicle-mounted camera or encoded image data output by an artificial neural network trained to receive the raw image data captured by the vehicle-mounted camera and to output the encoded image. In other words, the image data may comprise unprocessed or pre-processed image data. In other words, the image data may comprise the data output from the image sensor (Bayer-patterned values), the data output from the image-signal processors, or data output from a CNN that has processed the output from the camera.

Further, the method S100 comprises generating S102 2D (Two-Dimensional) position information for the image data representative of an image captured by a vehicle-mounted camera. The 2D position information is indicative of a position of each pixel out of a plurality of pixels of the image in a 2D reference frame of the image, or of a position of each patch out of a plurality of patches of the image in the 2D reference frame of the image. A patch, may as mentioned be understood as a group or subset of pixels out of all pixels in the image. For example, assuming that a patch is a 2x2 pixel grid, then for an image with 16x16 pixels one may have 64 non-overlapping 2x2 patches or 225 overlapping 2x2 patches. Naturally, the patch may be any suitable MxN grid of pixels, where M and N are positive integers, and M≠N.

In some embodiments, the 2D position information comprises 2D-coordinates of each pixel or patch or 2D positional encodings of each pixel or patch. In other words, the 2D position information may be represented by a numerical pair (e.g., horizontal and vertical position within the image grid) or by a high-dimensional vector encoding spatial positions using functions like sine and cosine or learned embeddings. For a patch, one may select a specific pixel position, such as the top-left corner pixel, to represent the position of the patch in the 2D reference frame of the image.

In other words, the method S100 may comprise generating S103 2D-coordinates indicative of a position of each pixel out of a plurality of pixels of the image in a 2D reference frame of the image, or indicative of a position of each patch out of a plurality of patches of the image in the 2D reference frame of the image. Alternatively, the method S100 may comprise generating S104 2D positional encodings indicative of a position of each pixel out of a plurality of pixels of the image in a 2D reference frame of the image, or indicative of a position of each patch out of a plurality of patches of the image in the 2D reference frame of the image.

As mentioned, the term "pixel" is to be interpreted broadly and may be understood as a single feature vector in a 2D grid of feature vectors. In the standard image case, a feature vector would be a 3D vector (R, G, B), while for an encoded image a feature vector may be of much higher dimensionality as each "pixel" in an encoded image may include information from other pixels in the image rather than only the RGB-values for that particular pixel.

The method S100 comprises feeding S106 input data comprising the generated 2D position information, extrinsic parameters of the vehicle-mounted camera, intrinsic parameters of the vehicle-mounted camera, and distortion parameters of the vehicle-mounted camera to a trained multilayer perceptron (MLP) configured to process the input data and to output 3D positional encodings for the plurality of pixels or the plurality of patches. As mentioned, the MLP is a type of artificial neural network architecture comprising an input layer for receiving pixel data pertaining to images, one or more hidden layers of neurons that apply non-linear transformations to the input data to capture complex features and patterns, and an output layer that generates the 3D positional encodings based on the processed data.

The MLP provides a data driven, fast, and computationally efficient solution to the problem of generating accurate and reliable 3D positional encodings for image data. Moreover, in some embodiments, the MLP is configured to process 2D position information of the pixels in image data and calibration data from a plurality of cameras. However, in some embodiments, the MLP is camera specific or camera type specific so that the 2D position information of the pixels and the calibration parameters of a specific camera is fed to a corresponding specific MLP or so that the 2D position information of the pixels and the calibration parameters of a specific camera type is fed to a corresponding specific MLP.

Further, the method S100 may comprise generating S105 time information for the image data, wherein the time information comprises a time stamp for each pixel or each patch. Accordingly, the input data that is fed to the MLP may further comprise the generated S105 time information. Thereby, the 3D positional encodings may further include a temporal parameter that can be utilized by the transformer network.

Further, in some embodiments, the method S100 comprises adding or concatenating S107 the 3D positional encodings to the image data. In other words, the 3D positional encodings are added (using a sum function or concatenation) to the pixel values or encoded feature vectors in case the image has been pre-processed with a neural network.

The method S100 further comprises feeding S108 the image data and the 3D positional encodings to a (trained) transformer network configured to process the image data together with the 3D positional encodings and to generate a prediction output in a 3D reference frame or 2D reference frame of the vehicle. The prediction output (may also be referred to as "perception output") may be an object detection prediction output, a lane detection prediction output, an object trajectory prediction output, an ego-vehicle trajectory prediction output, or an occupancy prediction output. In other words, the output from the (trained) transformer network may comprise a set of lane detections in the surrounding environment of the vehicle, a trajectory prediction of an object in the surrounding environment of the vehicle, a trajectory prediction of the ego-vehicle itself, or a prediction of occupied areas (i.e., non-drivable areas) in the surrounding environment of the vehicle.

As mentioned in the foregoing, the (trained) transformer network is preferably trained or otherwise configured to fuse sensor data from multiple sensors in order to solve a perception task (such as the ones exemplified above). Thus, in some embodiments, the feeding S108 the image data together with the 3D positional encodings to a (trained) transformer network further comprises feeding the image data, the 3D positional encodings, and sensor data originating from one or more other vehicle-mounted sensors to the (trained) transformer network in order to generate the prediction output in the 3D reference frame or 2D reference frame of the vehicle. The sensor data originating from one or more other vehicle-mounted sensors may for example comprise LiDAR output or RADAR output. However, the sensor data originating from one or more other vehicle-mounted sensors may include image data and 3D positional encodings from other cameras on the vehicle, where the positional encodings are generated S106 in an analogous manner as described above.

As mentioned, the prediction output from the transformer network may be in a 3D reference frame of the vehicle, i.e., in the three-dimensional space surrounding the vehicle, or it may be in a 2D reference frame of the vehicle, such as for example, a Bird's Eye View (BEV) output. Thus, the transformer is trained to fuse the input from different sensors of the vehicle and to provide an output in a 3D reference frame or a 2D reference frame. Regardless of the format of the output, the underlying concept is the same, to utilize the 3D positional encodings for pixels in image data provided by the MLP to understand the spatial relationships between the different sensor outputs of the vehicle and to solve a specific perception task.

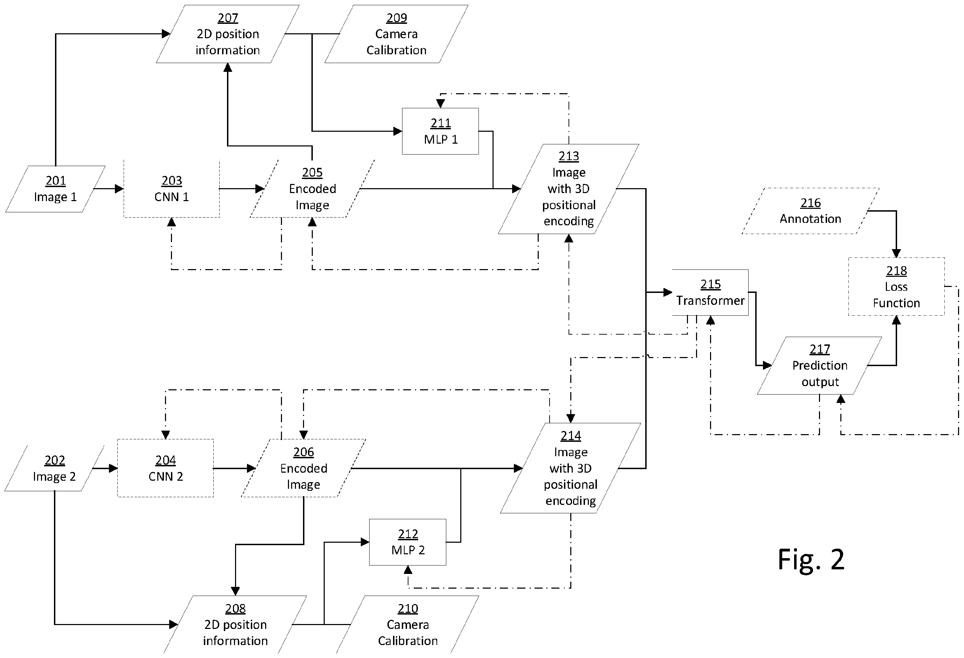

Further, in some embodiments, the multilayer perceptron has been trained in an end-to-end manner in conjunction with the transformer network. In other words, the herein proposed architecture for processing image data to generate perception output is suitable for an end-to-end training scheme using e.g., supervised learning techniques. Accordingly, the MLP is not necessarily explicitly trained to output "3D information" in the conventional sense, instead one may understand this end-to-end training aspect as that the MLP is trained to output the necessary data that the transformer needs to understand the spatial relationships between the outputs from different sensors and to solve a desired perception task. Further details related to the training of the MLP and the transformer network are provided in reference to Fig. 2 below.

In some embodiments, the method further comprises transmitting S109 the generated prediction output to one or more downstream functions of the ADS configured to control the vehicle based on the generated prediction output. In other words, the prediction/perception output provided by the transformer network is fed as input to one or more downstream functions of the ADS that are configured to output control signals for manoeuvring the vehicle via the vehicle's actuators (acceleration, deceleration, or steering). In some embodiments, the generated prediction output S109 is transmitted to a Decision and Control module of the ADS. Thus, the downstream ADS function does not necessarily have to be responsible for manoeuvring the vehicle, but may also be a "decision function" whose output in turn is transmitted to a "vehicle control function" of the ADS. Examples of downstream ADS functions include various AD or ADAS functions such as Lane Support Systems, Traffic Jam Pilot functions, Highway Pilot functions, Collision Avoidance Systems, Adaptive Cruise Control functions, Automated Parking functions, Path Planning functions, Trajectory Planning functions, and so forth.

Executable instructions for performing these functions are, optionally, included in a non-transitory computer-readable storage medium or other computer program product configured for execution by one or more processors.

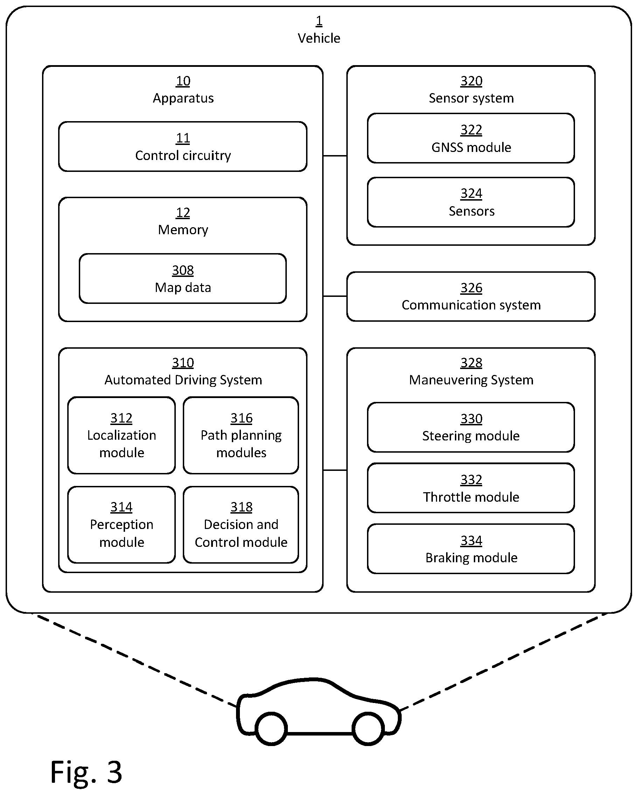

Fig. 2 is a schematic block diagram representation of an apparatus or system 10 for making 3D predictions from 2D input data for a perception functionality of an automated driving system of a vehicle in accordance with some embodiments. The apparatus 10 comprises control circuitry (e.g. one or more processors, ref. 11 in Fig. 3) configured to perform the functions of the method S100 disclosed herein, where the functions may be included in a non-transitory computer-readable storage medium 12 or other computer program product configured for execution by the control circuitry 11. In other words, the apparatus 10 comprises one or more memory storage areas 12 comprising program code, the one or more memory storage areas 12 and the program code configured to, with the one or more processors 11, cause the apparatus 10 to perform the method S100 according to any one of the embodiments disclosed herein. However, in order to better elucidate the herein disclosed embodiments, the control circuitry is represented as various blocks (CNNs, MLPs, Transformer) in Fig. 2, each of them linked to one or more specific functions of the control circuitry.

Furthermore, in Fig. 2, datasets are indicated in parallelograms, while functions are indicated in rectangles. Moreover, the downstream dataflow is indicated by solid line arrows, while the datasets, functions, and dataflow used for the end-to-end training of the MLP, transformer network, and CNNs are indicated by dashed-dotted lines. Optional features are indicated with broken line boxes or parallelograms.

Moreover, the block diagram depicted in Fig. 2 illustrates are particular use case where images 201, 202 from two separate cameras are processed and fused by the transformer network 215. In particular, each image 201, 202 is processed in a separate branch with a separate MLP 211, 212 to generate the 3D positional encodings, and optionally, with separate CNNs 203, 204 to encode the images 201, 202. However, as readily understood by the skilled reader, the two images 201, 202 could be processed in a common branch with a common MLP and optionally with a common CNN.

Accordingly, in some embodiments, the control circuitry is configured to obtain image data representative of an image 201, 202 captured by a vehicle-mounted camera. Further, the control circuitry is configured to generate 2D position information 207, 208 for image data representative of an image 201, 202 captured by a vehicle-mounted camera. The image data may comprise raw image data 201, 202 output by the vehicle-mounted camera or encoded image data 205, 206 output by an artificial neural network 205, 206 trained to receive the raw image data 201, 202 captured by the vehicle-mounted camera and to output the encoded image 205, 206.

The generated 2D position information 207, 208 is indicative of a position of each pixel out of a plurality of pixels of the image in a 2D reference frame of the image, or a position of each patch out of a plurality of patches of the image in the 2D reference frame of the image.

Next, input data comprising the generated 2D position information 207, 208, together with the calibration parameters 209, 210 of the cameras (extrinsic parameters, intrinsic parameters, and distortion parameters) are fed to a (trained) multilayer perceptron 211, 212 configured to process the input data and to output 3D positional encodings for the plurality of pixels or the plurality of patches. The 3D positional encodings may be added (sum or concatenation) to the image data in order to form an image with 3D positional encodings 213, 214. In some embodiments, time information comprising a time stamp for each pixel or each patch is included in the image with 3D positional encodings 213, 214.

Then, the image data and the 3D positional encodings 213, 214 are provided as input to a (trained) transformer network 215 configured to process the image data and the 3D positional encodings and to generate a prediction output 217 in a 3D reference frame or 2D reference frame of the vehicle. Accordingly, the transformer network 215 is trained or otherwise configured to fuse the 2D image data 201, 202 from two separate cameras to generate the prediction output 217 in a 3D reference frame or 2D reference frame of the vehicle. Albeit not shown in Fig. 2, the transformer network 215 may be configured to receive and fuse sensor data from other sensors, such as LiDARs and RADARs.

As mentioned, the MLP 211, 212 and the transformer network 215 may be trained together in an end-to-end fashion using supervised learning techniques. In more detail, during the training phase, one has a training dataset comprising a set of images (output by a monocular camera) forming input objects and a corresponding set of annotated output 216 for a specific perception task forming a desired output. Thus, for each input image there is a desired output that the transformer network is intended to generate for a specific perception task. For example, if the transformer network is intended for object detection tasks, the annotated dataset may comprise a 3D scene with 3D bounding boxes that have been manually added.

Assuming the transformer network and the MLP has been initialized and the parameters of each model has been setup, the input objects are fed through the processing chain. This step is often referred to as a forward pass. Next, a loss calculation is performed where the prediction output 217 is provided as input together with the desired output 216 to a loss function 218, also known as a cost function 218. The loss function 218 represents a specific mathematical function that quantifies the discrepancy between predicted values 217 and actual ground-truth values 216 in the training dataset.

Depending on the specific perception task different loss functions 218 may be used. For example, one can use cross-entropy loss, classification loss, regression loss, dice loss, or combinations thereof. Once the discrepancy between predicted values 217 and actual ground-truth values 216 has been quantified, the gradients of the loss with respect to the model parameters of the transformer network 215, the MLPs 211, 212, and optionally the CNNs 203, 204 are computed using backpropagation. Next, the model parameters of the transformer network 215, the MLPs 211, 212, and optionally the CNNs 203, 204 are updated using an optimization algorithm, such as Adam, Stochastic Gradient Descent, or RMSprop. The update aims to minimize the loss function 218. This process is then iterated by repeating the forward pass, loss calculation, backward pass, and parameter update steps for multiple epochs until the model performance converges.

Fig. 3 is a schematic illustration of an ADS-equipped vehicle 1 comprising an apparatus 10 for making perception predictions from 2D input data for a perception functionality of the ADS 310 of the vehicle 1.

As used herein, a "vehicle" is any form of motorized transport. For example, the vehicle 1 may be any road vehicle such as a car (as illustrated herein), a motorcycle, a (cargo) truck, a bus, etc.

The apparatus 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the apparatus 10 may form a part of the ADS 310, i.e. the apparatus 10 may be implemented as a module or feature of the ADS 310. The control circuitry 11 may comprise one or more processors, such as a central processing unit (CPU), graphics processing unit (GPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 3. Moreover, the vehicle 1 may comprise further elements than those shown in Fig. 3. While the various elements are herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 3 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LiDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the apparatus 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to some embodiments, any distributed or local memory device may be utilized with the systems and methods of this description. According to some embodiments the memory 12 is communicably connected to the processor 11 (e.g., via a circuit or any other wired, wireless, or network connection) and includes computer code for executing one or more processes described herein.

Accordingly, it should be understood that parts of the described solution may be implemented either in the vehicle 1, in a system located external the vehicle 1, or in a combination of internal and external the vehicle; for instance, in a server in communication with the vehicle, a so-called cloud solution. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various obtaining, generating, feeding, outputting, adding, transmitting, and controlling steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for making perception predictions from 2D input data for a perception functionality of an automated driving system of a vehicle, the method comprising:
generating (S102) 2D position information for image data representative of an image captured by a vehicle-mounted camera, wherein the 2D position information is indicative of:
a position of each pixel out of a plurality of pixels of the image in a 2D reference frame of the image, or
a position of each patch out of a plurality of patches of the image in the 2D reference frame of the image;
feeding (S106) input data comprising the generated 2D position information, extrinsic parameters of the vehicle-mounted camera, intrinsic parameters of the vehicle-mounted camera, and distortion parameters of the vehicle-mounted camera to a multilayer perceptron configured to process the input data and to output 3D positional encodings for the plurality of pixels or the plurality of patches;
feeding (S108) the image data and the 3D positional encodings to a transformer network configured to process the image data and the 3D positional encodings and to generate a prediction output in a 3D reference frame or a 2D reference frame of the vehicle.

2. The method (S100) according to claim 1, wherein the image data comprises raw image data output by the vehicle-mounted camera or encoded image data output by an artificial neural network trained to receive the raw image data captured by the vehicle-mounted camera and to output the encoded image.

3. The method (S100) according to claim 1 or 2, wherein the 2D position information comprises 2D-coordinates (S103) of each pixel or patch or 2D positional encodings (S104) of each pixel or patch.

4. The method (S100) according to any one of claims 1-3, wherein the multilayer perceptron has been trained in an end-to-end manner in conjunction with the transformer network.

5. The method (S100) according to any one of claims 1-4, further comprising:
generating (S105) time information for the image data, wherein the time information comprises a time stamp for each pixel or each patch; and
wherein the input data further comprises the generated time information.

6. The method (S100) according to any one of claims 1-5, further comprising:
adding or concatenating (S107) the 3D positional encodings to the image data.

7. The method (S100) according to any one of claims 1-6, wherein the feeding (S108) the image data together with the 3D positional encodings to a transformer network further comprises:
feeding the image data, the 3D positional encodings, and sensor data originating from one or more other vehicle-mounted sensors to the transformer network in order to generate the prediction output in the 3D reference frame or the 2D reference frame of the vehicle.

8. The method (S100) according to any one of claims 1-7, wherein the prediction output is one of an object detection prediction output, a lane detection prediction output, an object trajectory prediction output, an ego-vehicle trajectory prediction output, or an occupancy prediction output.

9. The method (S100) according to any one of claims 1-8, further comprising:
transmitting (S109) the generated prediction output to one or more downstream functions of the ADS configured to control the vehicle based on the generated prediction output.

10. A computer program product comprising instructions which, when the program is executed by a computing device of a vehicle, causes the computing device to carry out the method (S100) according to any one of claims 1-9.

11. A computer-readable storage medium comprising instructions which, when executed by a computing device of a vehicle, causes the computing device to carry out the method (S100) according to any one of claims 1-9.

12. An apparatus (10) for making perception predictions from 2D input data for a perception functionality of an automated driving system (310) of a vehicle (1), the apparatus (10) comprising one or more processors (11) and one or more memory storage areas (12) comprising program code, the one or more memory storage areas and the program code being configured to, with the one or more processors, cause the apparatus (10) to at least:
generate 2D position information (207, 208) for image data representative of an image (201, 202) captured by a vehicle-mounted camera, wherein the 2D position information is indicative of:
a position of each pixel out of a plurality of pixels of the image in a 2D reference frame of the image, or
a position of each patch out of a plurality of patches of the image in the 2D reference frame of the image;
feed input data comprising the generated 2D position information (207, 208), extrinsic parameters of the vehicle-mounted camera, intrinsic parameters of the vehicle-mounted camera, and distortion parameters of the vehicle-mounted camera to a multilayer perceptron (211, 212) configured to process the input data and output 3D positional encoding for the plurality of pixels or the plurality of patches;
feed the image data and the 3D positional encodings (213, 214) to a transformer network (215) configured to process the image data and the 3D positional encodings and to generate a prediction output (217) in a 3D reference frame or a 2D reference frame of the vehicle.

13. The apparatus (10) according to claim 12, wherein the one or more memory storage areas (12) and the program code being further configured to, with the one or more processors (11), cause the apparatus to at least:
generate time information for the image data, wherein the time information comprises a time stamp for each pixel or each patch; and
wherein the input data further comprises the generated time information.

14. The apparatus (10) according to claim 12 or 13, wherein the one or more memory storage areas (12) and the program code being further configured to, with the one or more processors (11), cause the apparatus to at least:
feed the image data, the 3D positional encodings (213, 214), and sensor data originating from one or more other vehicle-mounted sensors to the transformer network (215) in order to generate the prediction output (217) in the 3D reference frame or the 2D reference frame of the vehicle.

15. A vehicle (1) comprising the apparatus (10) according to any one of claims 12-14.
